(19) **Europäisches Patentamt**

**European Patent Office**

**Office européen des brevets**

(11) **EP 1 445 238 A1**

(12) **EUROPEAN PATENT APPLICATION**
published in accordance with Art. 158(3) EPC

(43) Date of publication:
**11.08.2004 Bulletin 2004/33**

(51) Int Cl.[7]: **C01F 11/08**, B01J 20/34,
B01D 53/50, B01D 53/96

(21) Application number: **02775227.8**

(22) Date of filing: **25.09.2002**

(86) International application number:
**PCT/JP2002/009830**

(87) International publication number:
**WO 2003/027019 (03.04.2003 Gazette 2003/14)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **26.09.2001 JP 2001294551**

(71) Applicant: **YABASHI INDUSTRIES CO., LTD.
Ogaki-shi Gifu 503-2213 (JP)**

(72) Inventors:
• **GOTO, Yoshimi
Gifu-shi, Gifu 501-0105 (JP)**

• **KYAW, Kyaw
Ogaki-shi, Gifu 503-2213 (JP)**
• **IWASHITA, Tetsushi
Ogaki-shi, Gifu 503-2221 (JP)**
• **MATSUDA, Hitoki
Midori-ku, Nagoya-shi, Aichi 458-0013 (JP)**

(74) Representative: **Hansmann, Axel et al
Hansmann & Vogeser
Patent- und Rechtsanwälte
Albert-Rosshaupter-Strasse 65
81369 München (DE)**

(54) **METHOD FOR RECYCLING CALCIUM SULFATE**

(57) Calcium sulfate is regenerated to lime at a relatively low temperature and in a short time. In a method of regenerating lime by reducing calcium sulfate by flowing a reducing gas containing 0.5 to 20% by volume of CO and 0.03 to 30% by volume of $CO_2$, the reduction is carried out in the presence of an aid selected from the group consisting of $Fe_2O_3$, $MgSO_4$ and mixtures thereof at a temperature of 900 to 1000°C. In cases where the aid is $Fe_2O_3$, the amount thereof is 0.2 to 10% by weight based on the weight of the calcium sulfate in terms of anhydrous calcium sulfate. In cases where the aid is $MgSO_4$, the amount thereof is preferably 10 to 50% by weight based on the weight of the calcium sulfate in terms of anhydrous calcium sulfate.

**Description**

Technical Field

The present invention relates to a method for regenerating calcium sulfate in which calcium sulfate is reduced by flowing a reducing gas containing CO as a reducing agent. More particularly, the present invention relates to a hot reduction process by which calcium sulfate is regenerated at a relatively low temperature for a short time.

Background Art

Calcium sulfates including gypsum dihydrate, gypsum hemihydrate and anhydrous gypsum are the most abundant among naturally occurring sulfates, and are produced in large amounts as by-produced wastes by various pollution-preventing systems in chemical industry and fertilizer industry. Although the by-produced gypsum from flue gas-desulfurizing systems is mainly used in gypsum boards, the supply of waste gypsum is much greater than the demands. In some cases, disposal of the waste calcium sulfate causes pollution problem, and solution thereof imposes a heavy economical burden. Therefore, it is very significant to develop a new use of calcium sulfate or regenerating calcium sulfate and to reutilize the regenerated lime, thereby recovering the value of the sulfur. An example is a method for producing lime by treating calcium sulfate with a reducing gas in a fluidized bed, as disclosed in U.S. Patents 6,024,932, 4,686,090 and 3,607,045.

Taking anhydrous gypsum as an example of calcium sulfates, the reduction of anhydrous gypsum by CO is expressed by the following reactions:

$$CaSO_4 + CO \rightarrow CaO + SO_2 + CO_2 \tag{1}$$

$$CaSO_4 + 4CO \rightarrow CaS + 4CO_2 \tag{2}$$

Since the reduction of gypsum by CO accompanies the side reaction yielding calcium sulfide as shown in (2), purity of the regenerated lime is decreased unless the reaction (2) is inhibited by adding $CO_2$ to the reducing gas. Further, this reaction requires a temperature of not lower than 1000°C and a long time.

If the reduction reaction can be carried out at a lower temperature and at a higher rate, the above-mentioned calcium sulfate-reducing process is further improved. However, any of the above-mentioned developed methods is silent about the reduction at a lower temperature. Accordingly, an object of the present invention is to provide a method for regenerating lime by which sulfate can be reduced at a lower temperature and in a shorter time, which is also advantageous from the view point of energy.

Disclosure of the Invention

The present invention constitutes a method for regenerating calcium sulfate at a lower temperature in a shorter time than the conventional methods, by carrying out the reduction of calcium sulfate in the presence of an aid selected from the group consisting of $Fe_2O_3$, $MgSO_4$ and mixtures thereof in a method for regenerating calcium sulfate comprising reducing calcium sulfate by flowing a reducing gas containing CO as a reducing agent.

The reduction is preferably carried out at a temperature of 900 to 1000°C. If the temperature is not higher than 900°C, the non-regenerated sulfate is likely to remain, so that a longer reduction time is required. Although the temperature may be not lower than 1000°C, the reduction rate reaches plateau, so that energy is wasted. The reducing gas preferably contains 0.5 to 20% by volume of CO and 0.03 to 30% by volume of $CO_2$, so that sufficient reduction reaction is attained and generation of CaS is inhibited by CO.

Calcium sulfate is reduced in the presence of an aid selected from the group consisting of $Fe_2O_3$, $MgSO_4$ and mixtures thereof. The aid is added to calcium sulfate, and preferably preliminarily mixed with calcium sulfate during the reduction reaction. The mixing may be carried out by an ordinary method as long as a uniformity to some degree is obtained. $Fe_2O_3$ is preferably added in an amount of 0.2 to 10% by weight, more preferably 0.3 to 2% by weight based on calcium sulfate in terms of anhydrous form thereof. $MgSO_4$ is preferably added in an amount of 10 to 50% by weight, more preferably 25 to 50% by weight based on calcium sulfate in terms of anhydrous form thereof. In cases where the aid is a mixture of $Fe_2O_3$ and $MgSO_4$, these components are preferably mixed in the amounts mentioned above, respectively.

In cases where $Fe_2O_3$ and/or $MgSO_4$ are(is) preliminarily contained in the material before being converted to calcium sulfate, or in cases where $Fe_2O_3$ and/or $MgSO_4$ are(is) mixed during the process for yielding calcium sulfate, as long as $Fe_2O_3$ and/or $MgSO_4$ are(is) contained in the material to be subjected to regeneration, the addition of the aid may be omitted, or only the shortage may be supplied. For example, in cases where the source of $MgSO_4$ is dolomite, and where the calcium sulfate contained in flue gas-treating agent used in desulfurization of waste gas is reduced, which agent mainly contains dolomite, it is not necessary to add magnesium sulfate because the sulfated dolomite usually contains 25 to 50% of magnesium sulfate. Similarly, in cases where a flue gas-treating agent prepared by mixing lime and dolomite in an appropriate ratio is reduced, and in cases where the lime used for the treatment of flue gas and dolomite are mixed and the mixture is subjected to the reduction, magnesium sulfate may exist in a sufficient amount. These may be used again for the treatment of flue gas, and may be recycled after the reduction.

As for the amount of the aid used, in case of using $Fe_2O_3$, the quality of the regenerated lime may be problematic if it is used in an amount of not less than 10% by weight since $Fe_2O_3$ becomes an impurity in the lime regenerated from calcium sulfate. On the other hand, if it is less than 0.2% by weight, the effect of lowering the reduction temperature and the effect of shortening the reduction time are decreased. To make the amount of the impurity in the calcium oxide obtained by the regeneration as small as possible, it is preferred to use $Fe_2O_3$ in an amount of 0.3 to 2% by weight. In case of using $MgSO_4$, the quality of the regenerated lime is often not problematic even if $MgO$ is contaminated since $MgSO_4$ is reduced to $MgO$ similar to lime. Therefore, $MgSO_4$ may be mixed in an amount up to 50% by weight. However, if the amount is less than 10% by weight, the effect of lowering the reduction temperature and the effect of shortening the reduction time are decreased.

Calcium sulfate may be granulated before being reduced as required. When the reduction is carried out in a fluidized bed, granulation of calcium sulfate is not necessary in most cases. However, in cases where a rotary kiln or a vertical furnace is used, granulation may be necessary for preventing scattering by gas flow, for preventing increase of pressure loss of the furnace, or for preventing decrease of the efficiency. Granulation of calcium sulfate may be carried out by an ordinary method such as extrusion granulation, rolling granulation or compression granulation. It is preferred to make the granules as small as possible in order to avoid decrease of the contact with the reducing gas, and it is preferred to avoid applying a larger pressure than required so as to decrease the porosity of the molded products. The granulation may be carried out before or after the addition of the aid as long as it is before the reduction.

The powdery or molded material is reduced by being contacted with a reducing gas containing 0.5 to 20% by volume of CO and 0.03 to 30% by volume of $CO_2$ at a temperature of 900 to 1000°C. The reduction is carried out by contacting the powdery or molded material with the reducing gas having the above-described composition at 900 to 1000°C. If the temperature is not higher than 900°C, non-regenerated sulfate may remain or a longer reduction time is required. Even if the temperature is not lower than 1000°C, the reduction rate reaches plateau, so that energy is wasted.

As the reducing gas, waste gas generated from a cokes furnace or a blast furnace may be industrially utilized. By mixing air or inert gas with the waste gas, the reducing gas containing 0.5 to 20% by volume of CO and 0.03 to 30% by volume of $CO_2$ may be obtained. The amounts of components which cause oxidation or reduction of the reducing gas containing appropriate amounts of CO and $CO_2$ are preferably as small as possible. However, $O_2$ may be mixed so as to attain the appropriate amounts of CO and $CO_2$ after being reacted with excess CO.

Industrially, the above-mentioned waste gas may be burned with oxygen or air to obtain the heat source. As the heat source, a separate fuel or electricity may also be utilized. The reduction reaction may be carried out in a furnace in which the material can be heated and can be contacted with a gas flow, such as fluidized bed, rotary kiln or vertical furnace, and the reaction may be carried out either by a continuous process or batch process. The reducing gas is blown into such a furnace and the material is retained in the furnace for, e.g., not less than 5 minutes, and then the material is recovered as regenerated lime or a regenerated product containing calcium oxide, magnesium oxide and other substances.

The gas recovered from the furnace in which the reduction reaction is carried out contains a large amount of $SO_2$. This may be oxidized to $SO_3$, and $SO_3$ may be dissolved in water to obtain sulfuric acid which may be reused.

By the method for regenerating calcium sulfate according to the present invention, the gypsum or the like which is the residue of flue gas desulfurization or which is construction waste may be economically regenerated to lime or the like. By this, effective utilization of natural sources and decrease in pollution may be attained. The regenerated lime or the like exhibits performance similar to a fresh product even if it is repeatedly recycled for flue gas desulfurization, so that it is not poor in quality and may be applied to any industrial applications which use gypsum or the like.

Examples

Examples and comparative examples of the method for regenerating calcium sulfate according to the present invention will now be described. The following examples are presented for more profound understanding of the present invention, and do not limit the scope of the present invention.

The regeneration rate and sulfate conversion rate mentioned in the description below are the values calculated from the following equations:

$$\text{Regeneration Rate (\%)} =$$

$$\text{Loss (g) by Reduction/Theoretical Amount (g) of } SO_3 \text{ in Material x 100}$$

$$\text{Sulfate Conversion Rate (\%)} =$$

$$\text{Increase (g) by sulfation/80/number of moles of CaO+MgO in the material x 100}$$

In Examples 1 to 3 and in Comparative Example, anhydrous gypsum of special grade of reagent was used.

(Example 1)

To anhydrous gypsum, 1% by weight of ferric oxide was added and mixed, and this mixture was used as the material. Five grams of this material was taken and placed in a quartz tube of an electric circular furnace, and heated to 1000°C. Thereafter, a reducing gas containing 2% by volume of CO, 30% by volume of $CO_2$ and balance of $N_2$ was flown at a flow rate of 5L/min for 15 minutes to carry out the reduction. The regeneration rate was 98%.

(Example 2)

The same procedure as in Example 1 was repeated except that the reduction temperature was 900°C and the reduction time was 60 minutes. As a result, the regeneration rate was 98%.

(Example 3)

The same procedure as in Example 1 was repeated except that the amount of ferric oxide was 10% by weight, the reduction temperature was 900°C and the reduction time was 40 minutes. As a result, the regeneration rate was 98%.

(Example 4)

Dolomite powder DW-350 (CaO 37.5% by weight, MgO 12.6% by weight) produced by Shimizu Kogyo Co., Ltd. was placed in a quartz tube of an electric circular furnace, and heated to 850°C, followed by flowing $SO_2$ gas at a flow rate of 5L/min for 360 minutes. The sulfate conversion rate was 89%, and the mixture substantially consists of $CaSO_4$ and $MgSO_4$. As in Example 1, 5 g of this material was taken and placed in a quartz tube of an electric circular furnace, and heated to 1000°C. Thereafter, a reducing gas containing 2% by volume of CO, 30% by volume of $CO_2$ and balance of $N_2$ was flown at a flow rate of 5L/min for 5 minutes to carry out the reduction. The regeneration rate was 98%.

(Example 5)

To limestone powder LW-350 (CaO 55.6% by weight) produced by Shimizu Kogyo Co., Ltd., 1.3% (1% by weight based on the $CaSO_4$ produced by the conversion of limestone powder to $CaSO_4$) of ferric oxide of special grade of reagent was added and mixed. As in Example 1, 5 g of this material was taken and placed in a quartz tube of an electric circular furnace, and heated to 1000°C. Thereafter, a reducing gas containing 2% by volume of CO, 30% by volume of $CO_2$ and balance of $N_2$ was flown at a flow rate of 5L/min for 20 minutes to carry out the reduction. The cycle of this sulfation and regeneration was repeated 5 times. The sulfate conversion rate in each cycle was, from the first cycle, 89, 91, 88, 88 and 87%, respectively, and the regeneration rate was 98% in every cycle.

(Comparative Example)

The same procedure as in Example 1 was repeated except that the ferric oxide was not added and the reduction time was 120 minutes. As a result, the regeneration rate was 90%.

**Claims**

1. A method for regenerating calcium sulfate, comprising reducing calcium sulfate by flowing a reducing gas containing CO as a reducing agent, **characterized in that** said reduction is carried out in the presence of an aid selected from the group consisting of $Fe_2O_3$, $MgSO_4$ and mixtures thereof.

2. The method for regenerating calcium sulfate according to claim 1, wherein said reduction is carried out at a temperature of 900 to 1000°C.

3. The method for regenerating calcium sulfate according to claim 1 or 2, wherein said reducing gas contains 0.5 to 20% by volume of CO and 0.03 to 30% by volume of $CO_2$.

4. The method for regenerating calcium sulfate according to any one of claims 1 to 3, wherein said aid is $Fe_2O_3$, and the amount thereof is 0.2 to 10% by weight based on the weight of said calcium sulfate in terms of anhydrous calcium sulfate.

5. The method for regenerating calcium sulfate according to any one of claims 1 to 3, wherein said aid is $MgSO_4$ and the amount thereof is 10 to 50% by weight based on the weight of said calcium sulfate in terms of anhydrous calcium sulfate.

6. The method for regenerating calcium sulfate according to any one of claims 1 to 3, wherein said aid is $MgSO_4$ and source of said $MgSO_4$ is dolomite.

7. The method for regenerating calcium sulfate according to any one of claims 1 to 6, wherein said calcium sulfate is granulated before said reduction.

| | | International application No. |
|---|---|---|
| | **INTERNATIONAL SEARCH REPORT** | PCT/JP02/09830 |

**A. CLASSIFICATION OF SUBJECT MATTER**
Int.Cl⁷ C01F11/08, B01J20/34, B01D53/50, 53/96

According to International Patent Classification (IPC) or to both national classification and IPC

**B. FIELDS SEARCHED**

Minimum documentation searched (classification system followed by classification symbols)
Int.Cl⁷ C01F11/08, B01J20/34

Documentation searched other than minimum documentation to the extent that such documents are included in the fields searched
Jitsuyo Shinan Koho          1922–1996   Toroku Jitsuyo Shinan Koho   1994–2002
Kokai Jitsuyo Shinan Koho    1971–2002   Jitsuyo Shinan Toroku Koho   1996–2002

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 49-013713 B1  (Grillo-Werke AG.),<br>02 April, 1974 (02.04.74),<br>Examples; Claims<br>& US 3492083 A | 1<br>2,6<br>3-5,7 |
| Y | JP 57-061628 A  (Mitsubishi Heavy Industries, Ltd.),<br>14 April, 1982 (14.04.82),<br>Page 1, lower left column; page 2, lower left column to lower right column<br>(Family: none) | 2 |
| Y | JP 62-030527 A  (Hitachi Zosen Corp.),<br>09 February, 1987 (09.02.87),<br>Claims<br>(Family: none) | 6 |

[X] Further documents are listed in the continuation of Box C.    [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
05 November, 2002 (05.11.02)

Date of mailing of the international search report
19 November, 2002 (19.11.02)

Name and mailing address of the ISA/
Japanese Patent Office

Authorized officer

Facsimile No.

Telephone No.

Form PCT/ISA/210 (second sheet) (July 1998)

6

**INTERNATIONAL SEARCH REPORT**

International application No.

PCT/JP02/09830

C (Continuation). DOCUMENTS CONSIDERED TO BE RELEVANT

| Category* | Citation of document, with indication, where appropriate, of the relevant passages | Relevant to claim No. |
|---|---|---|
| A | JP 61-025861 Y2 (Kawasaki Heavy Industries, Ltd.), 04 August, 1986 (04.08.86), Page 2, column 4 (Family: none) | 1-7 |
| A | JP 58-178337 U (Babcock-Hitachi Kabushiki Kaisha), 29 November 1983, (29.11.83), Claims (Family: none) | 1-7 |

Form PCT/ISA/210 (continuation of second sheet) (July 1998)